# FASCICULE DE BREVET EUROPEEN

(11) **EP 3 963 192 B1**
(45) Date de publication et mention de la délivrance du brevet: **31.05.2023**
(21) Numéro de dépôt: 20754316.6
(22) Date de dépôt: 23.04.2020
(51) Int. Cl.: F02C 7/045, F02K 1/34, F02K 1/82

(54) **INTÉGRATION D'UN AMORTISSEUR DE FLOTTEMENT DU FAN DANS UN CARTER MOTEUR**
INTEGRATION EINES LÜFTERFLATTERDÄMPFERS IN EIN MOTORGEHÄUSE
INTEGRATION OF A FAN FLUTTER DAMPER IN AN ENGINE CASING

(30) Priorité: 30.04.2019 FR 1904578
(43) Date de publication de la demande: 09.03.2022
(73) Titulaire: SAFRAN AIRCRAFT ENGINES, 75015 Paris (FR)
(72) Inventeur: RIOU, Georges, Jean, Xavier, 77550 MOISSY-CRAMAYEL (FR); MARDJONO, Jacky, Novi, 77550 MOISSY-CRAMAYEL (FR); DAON, Renaud, Yannick, Fabien, 77550 MOISSY-CRAMAYEL (FR); DE CACQUERAY-VALMENIER, Nicolas, Pierre, Alain, Edme, 77550 MOISSY-CRAMAYEL (FR)
(74) Mandataire: Cabinet Beau de Loménie
(86) Numéro de dépôt international: PCT/FR2020/050698
(87) Numéro de publication internationale: WO 2020/221976

(56) Documents cités:
- EP-A1- 2 846 030
- GB-A- 1 373 063
- US-A- 5 923 003
- US-A1- 2015 027 629
- US-A1- 2018 166 058
- US-B2- 10 125 688

## Description

### Domaine Technique

L'invention concerne le domaine de l'amortissement d'ondes de pression issues du fluide parcourant les conduits d'une turbomachine d'un aéronef et plus particulièrement l'amortissement du flottement d'une soufflante d'une turbomachine.

### Technique antérieure

Le flottement est une instabilité aéroélastique liée au couplage entre les vibrations de l'aube et l'écoulement autour de l'aubage : les vibrations de l'aube induisent une modification de l'écoulement qui vient à son tour générer des vibrations de l'aubage. Avec l'amélioration continue de leur rendement, les soufflantes développées aujourd'hui sont de plus en plus sensibles au phénomène de flottement. Les technologies amortissantes classiques pour le flottement, telles que les bonbons ou les frotteurs par exemple, sont incorporées sur la partie tournante, par exemple le disque ou l'aube.

Une autre manière de s'affranchir de ce problème est l'adjonction d'un amortisseur spécifique dans le carter fan ou la manche d'entrée d'air, le type d'amortisseur retenu le plus courant étant le résonateur de Helmholtz.

Les fréquences des fluctuations de pression associées à ce flottement sont généralement de l'ordre de 50 à 300 Hz. Les fréquences des fluctuations de pression associées à ce flottement sont donc plus basses que les fréquences pour lesquelles les traitements acoustiques usuels sont optimisés. Le volume de la cavité d'un résonateur de Helmholtz optimisé aux fréquences des fluctuations de pression associées à ce flottement est par conséquent particulièrement important, et bien plus important que pour les résonateurs de Helmholtz utilisés pour les traitements acoustiques usuels dans une turbomachine. Il en résulte ainsi une difficulté d'intégration des résonateurs de Helmholtz dédiés au traitement des fréquences des fluctuations de pression associées au flottement.

De plus, les technologies d'amortissement connues et utilisées pour ces fréquences prévoient généralement d'ajouter des caissons volumineux derrière la manche d'entrée d'air acoustique ou le carter fan pour former les cavités résonnantes de résonateurs de Helmholtz générant un encombrement supplémentaire important.

Les technologies les plus judicieuses en ce qui concerne leur intégration dans une turbomachine au niveau du carter fan sont généralement celles dont la cavité est placée couchée parallèlement à l'axe moteur. Les turboréacteurs dotés d'un mécanisme de découplage du fan à l'arbre de turbine en cas de problème disposent d'une couche à base de nid d'abeille relativement épaisse entre la cartouche d'abradable soufflante et le carter externe. Cette épaisseur de couche de nid d'abeille peut être généralement de l'ordre de 25 à 30 mm sur une longueur d'environ 30 à 35 cm dans la direction axiale.

Il est connu un panneau de traitement acoustique destiné à être monté sur une turbomachine comprenant une couche externe de matériau non poreux, un coeur en nid d'abeilles, et une couche interne de matériau poreux, le coeur en nid d'abeilles étant intercalé entre la couche externe et la couche interne. Le coeur en nid d'abeilles comprend une pluralité de parois définissant les cellules, ou alcôves, du nid d'abeilles, certaines de ces cellules pouvant être en communication fluidique avec d'autres cellules du coeur en nid d'abeilles via des orifices formés dans des parois du coeur en nid d'abeilles. Si un couplage acoustique optimisé entre cellules est réalisé, ces orifices amplifient les pertes visco-thermiques, résultant dans une dissipation d'énergie acoustique supplémentaire et une amélioration de la réduction du bruit du panneau acoustique.

Les documents US 5 923 003 A et GB 1 373 063 A présentent des panneaux acoustiques selon l'art antérieur.

### Exposé de l'invention

L'invention vise à proposer un panneau de traitement acoustique notamment pour l'amortissement de flottement de la soufflante d'un turboréacteur et pouvant être implanté sans modification majeure dans le carter fan d'un turboréacteur, et plus particulièrement d'un turboréacteur doté d'un mécanisme de découplage d'une soufflante à un arbre de turbine, en cas de problème.

Dans un objet de l'invention, il est proposé un panneau de traitement acoustique destiné à être disposé sur au moins une paroi d'un turboréacteur en contact avec un écoulement fluidique, le panneau comprenant une première plaque, une seconde plaque parallèle à la première plaque et présentant une première face destinée à être en contact avec un écoulement fluidique et une seconde face en regard de la première plaque, et des cellules de traitement acoustique s'étendant entre les première et seconde plaques et comportant chacune une enceinte et une cavité délimitée par l'enceinte. Les cellules de traitement acoustique peuvent former ensemble une structure en nid d'abeille.

Selon une caractéristique générale de l'invention, l'enceinte de chaque cellule comprend deux ouvertures en vis-à-vis l'une de l'autre, au moins une des ouvertures étant confondue avec une ouverture de l'enceinte d'une cellule adjacente.

En outre, la seconde plaque comprend une portion non poreuse couvrant au moins une première cellule de traitement acoustique et au moins une portion poreuse disposée en regard d'au moins une seconde cellule de traitement acoustique et comprenant au moins une perforation traversant l'épaisseur de la seconde plaque et permettant aux ondes sonores d'accéder directement à au moins une seconde cellule de traitement acoustique et à ladite au moins une première cellule de traitement acoustique via les ouvertures.

Le panneau de traitement acoustique selon l'invention permet l'implantation d'un amortisseur de flottement soufflante dans les turboréacteurs sans avoir de modifications majeures dans la conception du carter de la soufflante, c'est-à-dire le carter fan, toutes les fonctions existantes n'étant pas impactées.

Le panneau de traitement acoustique permet d'utiliser un volume existant, et non un volume dédié, pour créer des canaux acoustiques servant de cavités de résonateur de Helmholtz derrière l'abradable de la soufflante, les canaux acoustiques étant formés par la réunion de plusieurs cellules alignées dans une seule et même direction et en communication les unes avec les autres grâce aux ouvertures dans leur enceinte respective.

L'impact sur la masse et l'encombrement des modifications apportées pour la mise en place d'un panneau de traitement acoustique selon l'invention sont minimes et la pénalité massique qui en résulte est donc relativement négligeable.

Bien que le panneau de traitement acoustique selon l'invention soit dédié à l'amortissement du flottement fan, ce panneau peut aussi être transposé au besoin d'atténuation acoustique lorsque les hauteurs disponibles derrière les parois de conduit moteur sont très insuffisantes en regard des fréquences à atténuer.

Les multi-perforations forment des orifices d'entrée aux canaux de propagation du panneau de traitement acoustique. Lorsque le panneau de traitement acoustique est monté sur le turboréacteur, les perforations sont situées localement à l'extrémité des canaux de propagation qui se trouve en amont de la soufflante, contrairement aux dispositifs de traitement acoustique conventionnels dans lesquels l'ensemble de la tôle sur les cloisons nid d'abeilles est perforée.

Pour assurer un bon fonctionnement du système, la longueur de la zone perforée ne peut être supérieure à la hauteur des cellules nid d'abeille en regard. Autrement dit, pour une cellule la longueur de la zone perforée est inférieure à la hauteur de la cellule.

Ainsi, de préférence, ladite au moins une portion poreuse est située localement à une extrémité de la seconde plaque, et de préférence une extrémité amont par rapport au sens de l'écoulement fluidique.

Selon un premier aspect du panneau de traitement acoustique, les cellules sont disposées en rangées parallèles entre elles, et les ouvertures des cellules d'une même rangée sont alignées selon la direction de la rangée pour définir un canal de propagation d'ondes sonores traversant les ouvertures des cellules de la rangée.

Selon un deuxième aspect du panneau de traitement acoustique, au moins une rangée comprend des cellules de traitement acoustique comportant au moins une ouverture supplémentaire communiquant avec une cellule d'une rangée adjacente.

Les ouvertures supplémentaires des cellules permettent d'associer des cellules de traitement acoustique pour former des cavités résonantes de Helmholtz de plus grand volume et ainsi de favoriser l'accord des résonateurs de Helmholtz vers des fréquences plus basses, puisque l'accord en fréquence d'un résonateur d'Helmholtz dépend du volume de sa cavité résonante et du volume de son col ou de ses cols.

Selon un troisième aspect du panneau de traitement acoustique, chaque cellule de traitement acoustique comprend de préférence une cavité cylindrique à base hexagonale délimitée par une enceinte comportant six parois s'étendant entre la première plaque et la seconde plaque.

Selon un quatrième aspect du panneau de traitement acoustique, chaque ouverture s'étend préférentiellement sur 10% à 95% de la surface de la paroi sur laquelle elle est réalisée pour avoir des parois suffisamment poreuse pour ne pas avoir d'influence sur la propagation acoustique dans les canaux de propagation acoustique formés.

De préférence, chaque ouverture couvre plus de 25% de la surface de la paroi sur laquelle elle est réalisée pour un fonctionnement optimal, c'est-à-dire pour un fonctionnement où la propagation des ondes n'est pas affectée ou peu affectée dans chaque canal de propagation

Selon un cinquième aspect du panneau de traitement acoustique, les ouvertures peuvent avoir la même forme géométrique telle que, par exemple, une forme générale rectangulaire, circulaire, ovoïde, triangulaire, en étoile, en croix.

Selon un sixième aspect du panneau de traitement acoustique, chaque ouverture peut être formée par une pluralité d'orifices. Une ouverture forme ainsi une grille ou un maillage dont l'ensemble des orifices se comporte collectivement comme une ouverture formée d'un seul et unique grand trou.

Selon un septième aspect du panneau de traitement acoustique, la seconde plaque comprend des cols solidaires chacun d'une desdites perforations et s'étendant en saillie de la seconde face de la seconde plaque entre une première bouche et une seconde bouche.

L'ajout de cols aux perforations de la seconde plaque dans les cellules de traitement acoustique permet de favoriser l'accord des résonateurs de Helmholtz vers des fréquences plus basses, puisque l'accord en fréquence d'un résonateur d'Helmholtz dépend du volume de sa cavité résonante et du volume de son col ou de ses cols. Selon un huitième aspect du panneau de traitement acoustique, les cellules de traitement acoustique disposés en regard d'au moins une perforation de la seconde plaque comprennent chacune un pavillon acoustique s'étendant à l'intérieur de l'enceinte de la cellule entre une première bouche solidaire de la seconde plaque et une seconde bouche plus petite que la première bouche.

De manière similaire, l'ajout d'un pavillon acoustique dans une cellule de traitement acoustique permet de favoriser l'accord des résonateurs de Helmholtz vers des fréquences plus basses, puisque l'accord en fréquence d'un résonateur d'Helmholtz dépend du volume de sa cavité résonante et du volume de son col ou de ses cols. Selon un neuvième aspect du panneau de traitement acoustique, pour assurer un bon fonctionnement du panneau de traitement acoustique, la longueur selon la direction axiale de ladite portion de la plaque est inférieure à la hauteur des cellules disposées en regard de la dite portion de la plaque.

Dans un autre objet de l'invention il est proposé un turboréacteur comprenant une nacelle dotée d'au moins une paroi comprenant au moins un panneau de traitement acoustique tel que défini ci-dessus.

Le panneau de traitement acoustique offre la possibilité d'incorporer une technologie amortissante sur une partie fixe du turboréacteur, telle qu'une nacelle ou un carter, qui est moins contrainte pour contrôler des vibrations de la partie tournante.

Ledit au moins un panneau de traitement acoustique peut ainsi être monté sur le turboréacteur pour former des cavités de résonateurs de Helmholtz à l'intérieur du carter fan, le nid d'abeilles du panneau de traitement acoustique servant également au bon fonctionnement du mécanisme de découplage occasionnel du fan.

Selon un aspect du turboréacteur, au moins un panneau de traitement acoustique peut comprendre des canaux de propagation d'ondes sonores tels que définis ci-dessus et le turboréacteur peut définir une direction axiale correspondant à l'axe de rotation des turbines et une direction radiale, les canaux de propagation étant alignés dans des directions non parallèles à la direction axiale du turboréacteur.

Avoir des panneaux de traitement acoustique dont les ouvertures sont alignées dans une direction diagonale par rapport à la direction axiale du turboréacteur permet de fournir une augmentation du volume des canaux de propagation pour un encombrement de nid d'abeilles fixé, ce qui favorise l'accord des résonateurs de Helmholtz vers des fréquences plus basses.

### Brève description des dessins

[Fig. 1] La figure 1 présente une vue en section d'un turboréacteur selon un mode de réalisation de l'invention, dans un plan longitudinal du turboréacteur.
[Fig. 2] La figure 2 illustre une vue partielle en perspective d'un panneau de traitement acoustique selon un mode de réalisation de l'invention.
[Fig. 3] La figure 3 représente une vue en perspective d'un premier exemple de structure en nid d'abeilles du panneau de traitement acoustique de la figure 2.
[Fig. 4] La figure 4 représente une vue en perspective d'un deuxième exemple de structure en nid d'abeilles du panneau de traitement acoustique de la figure 2.
[Fig. 5] La figure 5 représente une vue en perspective d'un troisième exemple de structure en nid d'abeilles du panneau de traitement acoustique de la figure 2.
[Fig. 6] La figure 6 représente une vue en coupe du panneau de traitement acoustique de la figure 2 avec un premier exemple de couche d'entrée.
[Fig. 7] La figure 7 représente une vue en coupe du panneau de traitement acoustique de la figure 2 avec un deuxième exemple de couche d'entrée.
[Fig. 8] La figure 8 représente une vue en coupe du panneau de traitement acoustique de la figure 2 avec un troisième exemple de couche d'entrée.

### Description des modes de réalisation

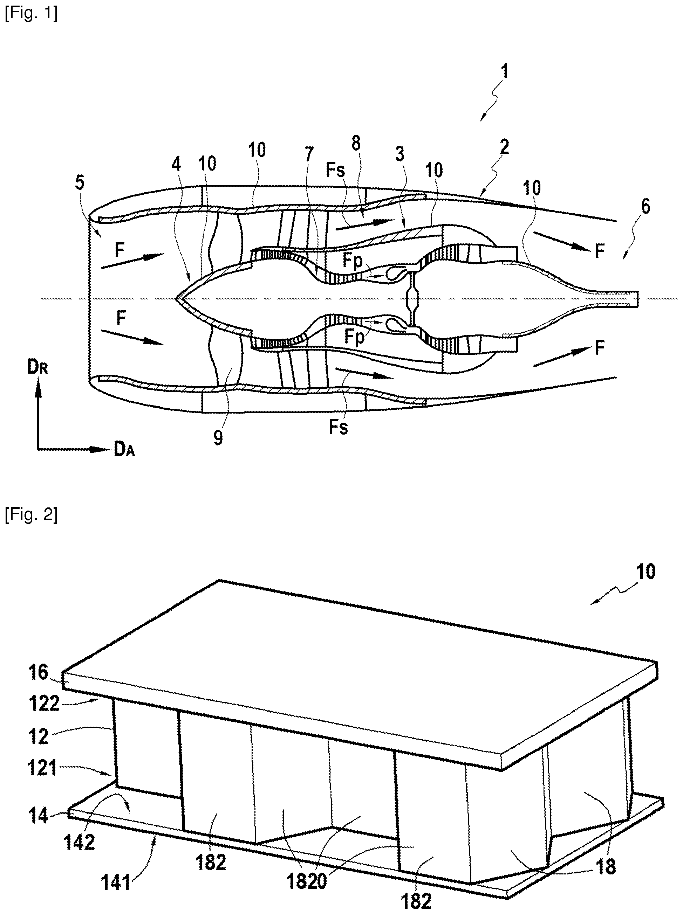

Sur la figure 1 est représentée une vue en section d'un turboréacteur 1 selon un mode de réalisation de l'invention, dans un plan longitudinal du turboréacteur 1.

Le turboréacteur 1 comprend une nacelle 2, un carter intermédiaire 3 et un carter interne 4. La nacelle 2 et les deux carters 3 et 4 sont coaxiaux et définissent une direction axiale D_{A} et une direction radiale D_{R}. La nacelle 2 définit à une première extrémité un canal d'entrée 5 d'un écoulement de fluide et à une seconde extrémité, opposée à la première extrémité, un canal d'échappement 6 d'un écoulement de fluide.. Le carter intermédiaire 3 et le carter interne 4 délimitent entre eux une veine primaire 7 d'écoulement de fluide. La nacelle 2 et le carter intermédiaire 3 délimitent entre eux une veine secondaire 8 d'écoulement de fluide. La veine primaire 7 et la veine secondaire 8 sont disposés selon une direction axiale D_{A} du turboréacteur 1 entre le canal d'entrée 5 et le canal d'échappement 6.

Le turboréacteur 1 comprend en outre une soufflante 9 configurée pour délivrer un flux d'air F comme écoulement fluidique, le flux d'air F étant divisé en sortie de la soufflante en un flux primaire FP circulant dans la veine primaire 7 et en un flux secondaire FS circulant dans la veine secondaire 8.

Le turboréacteur 1 comprend en outre des panneaux de traitement acoustique 10 configurés pour atténuer les ondes acoustiques émises par le turboréacteur 1 avant que ces ondes ne s'échappent à l'extérieur, radialement, de la nacelle 2 du turboréacteur 1.

Chaque panneau de traitement acoustique 10 est configuré pour atténuer des ondes acoustiques dont la fréquence appartient à une plage de fréquences prédéterminée.

Dans le mode de réalisation illustré sur la figure 1, les panneaux 10 de traitement acoustique sont intégrés à la nacelle 2, au carter intermédiaire 3 et au carter interne 4. Sur le carter interne 4, les panneaux 10 de traitement acoustique sont intégrés, d'une part, sur la portion en amont du carter intermédiaire 3 selon la direction axiale D_{A} et notamment sur la portion portant la soufflante 9, et, d'autre part, sur une portion en aval du carter intermédiaire 3.

Sur la figure 2 est représentée une vue partielle en perspective d'un panneau de traitement acoustique 10 selon un mode de réalisation de l'invention.

En référence à la figure 2, le panneau de traitement acoustique 10 comporte un coeur 12, une couche d'entrée 14 et une couche réfléchissante 16.

Le coeur 12 présente une structure en nid d'abeille. Plus précisément, le coeur 12 comporte une pluralité d'alvéoles 18, agencées selon une structure en nid d'abeilles connue. Chaque alvéole 18 forme une cellule de traitement acoustique pour l'absorption d'ondes sonores présentant une forme cylindrique à base hexagonale. Chaque cellule de traitement acoustique 18 comprend ainsi une cavité résonante 180 de forme cylindrique à base hexagonale et une enceinte 182 comportant 6 parois 1820 s'étendant entre la couche d'entrée 14 et la couche réfléchissante 16.

Chaque alvéole 18 débouche sur une première face 121 du coeur 12 et sur une seconde face 122 du coeur 18 située à l'opposé de la première face 121. La première face 121 du coeur 12 est en contact avec la couche d'entrée 14 et est destinée à être orientée vers la veine d'air, primaire 7 ou secondaire 8 selon l'emplacement du panneau de traitement acoustique 10. La seconde face 122 du coeur 12 est en contact avec la couche réfléchissante 16 et est destinée à être orientée à l'opposé de la veine d'air.

Selon le mode de réalisation, le coeur 12 peut être réalisé en métal, ou dans un matériau composite, tel qu'un matériau composite formé de fibres de carbone ou de verre noyées dans une matrice de résine durcie.

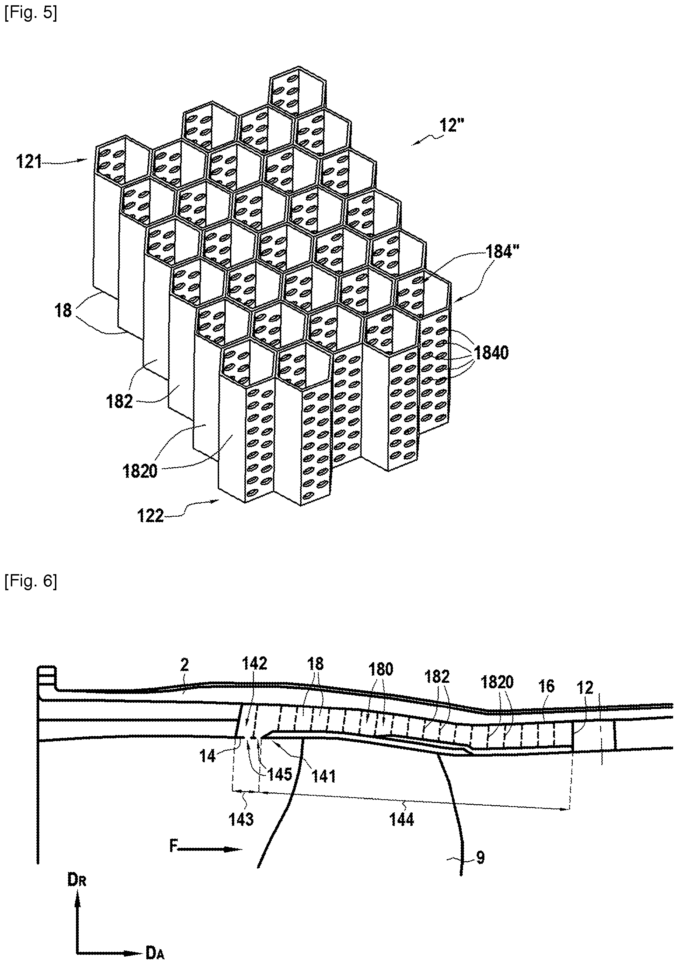

La couche d'entrée 14 peut être une plaque monobloc formée par fabrication additive. La couche d'entrée 14 présente une première face 141 en contact avec un écoulement fluidique tel que le flux F et une seconde face 142 opposée à la première face 141 et en regard du coeur 12 et de la couche réfléchissante 16. Au moins une portion de la couche d'entrée 14 est poreuse. Comme cela est illustré sur les figure 6 à 8 explicités ultérieurement, la portion 143 poreuse peut comprendre pour cela des perforations 145 traversant la couche d'entrée 14 et débouchant sur des alvéoles 18 du coeur 12, plusieurs perforations 145 pouvant déboucher sur une même alvéole 18.

La couche réfléchissante 16 est adaptée pour réfléchir des ondes acoustiques présentant une fréquence appartenant à la plage de fréquences prédéterminée. Elle est solidaire des parois 1820 de l'enceinte 182 des alvéoles 18 du coeur 12 au niveau de sa seconde face 122. Elle peut être fixée au coeur 12 par collage par exemple. Selon le mode de réalisation, la couche réfléchissante 16 peut être réalisée en métal ou dans un matériau composite, tel qu'un matériau composite formé de fibres de carbone ou de verre noyées dans une matrice de résine durcie.

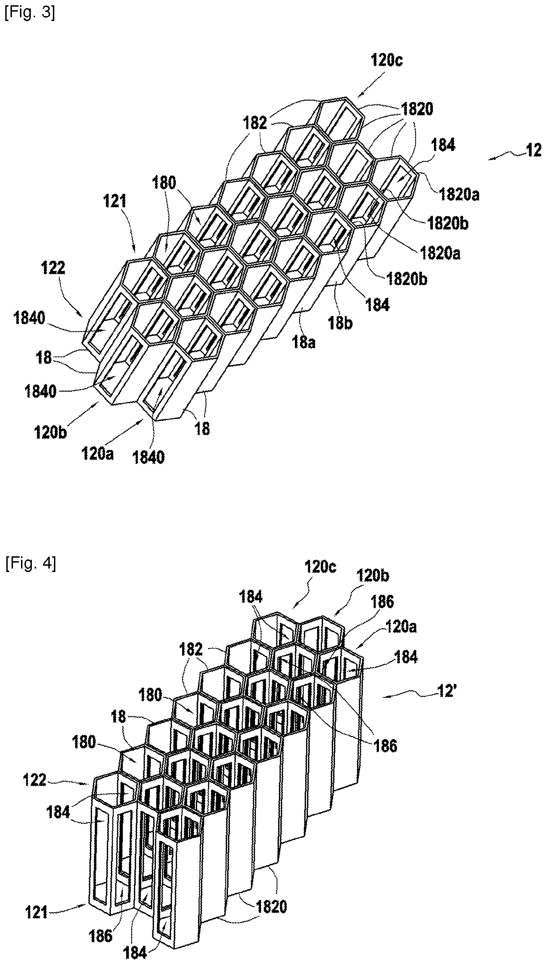

Sur la figure 3 est illustrée une vue en perspective d'un premier exemple de structure en nid d'abeilles formant le coeur 12 du panneau de traitement acoustique 10 de la figure 2.

Dans ce premier exemple illustré, les alvéoles 18 sont disposées en quinconce et forment des rangées 120a, 120b et 120c d'alvéoles 18 s'étendant dans des directions parallèles les unes aux autres.

En outre, chaque enceinte 182 d'alvéole 18 comprend deux parois 1820a et 1820b en vis-à-vis l'une de l'autre, parmi ses six parois 1820, comportant chacune une ouverture 184 rectangulaire. Chaque alvéole 18 étant adjacente à une autre alvéole 18, au moins une des parois 1820 de l'enceinte 182 d'une alvéole 18 est en contact ou confondue avec une paroi 1820 de l'enceinte 182 d'une alvéole adjacente 18. En considérant une première alvéole 18a et une seconde alvéole 18b adjacente à la première alvéole 1820 comprenant une ouverture 184, les parois 1820a et 1820b respectivement de la première alvéole 18a et de la seconde alvéole 18b sont adjacentes ou confondues et traversées par l'ouverture 184.

Dans d'autres modes de réalisation, les ouvertures 184 peuvent avoir une autre forme comme par exemple une forme circulaire, ovoïde, triangulaire, en étoile, en croix.

Comme cela est illustré sur la figure 3, les ouvertures 184 des alvéoles 18 d'une même rangée 120a, 120b ou 120c sont alignées selon la direction de la rangée correspondante 120a, 120b ou 120c et définissent ainsi un canal 1840 de propagation d'ondes sonores traversant les ouvertures 184 des alvéoles 18 de la rangée 120a, 120b, 120c.

Dans le mode de réalisation illustré sur la figure 3, chaque ouverture 184 s'étend sur plus de 25% de la surface de la paroi 1820a ou 1820b dans laquelle elle est réalisée pour avoir des parois ouvertes 1820a et 1820b suffisamment poreuse pour ne pas avoir d'influence sur la propagation acoustique dans les canaux de propagation acoustique 1840 formés.

Pour avoir une fréquence d'accord d'environ 200Hz pour le panneau de traitement acoustique 10 selon ce premier exemple, le panneau de traitement acoustique 10 présente une épaisseur de coeur de 30 mm et une longueur du coeur 12 de 324 mm selon la direction dans laquelle s'étendent les rangées 120a, 120b, 120c d'alvéoles 18 et les canaux 1840 de propagation, et comprennent le long de cette longueur 34 alvéoles 18 dont la largeur de maille standard est de 3/8 inch soit 9,525 mm et dont les canaux de propagation 1840 s'étendent dans une direction à la direction axiale D_{A} du turboréacteur 1. Les ouvertures 1840 couvrent chacune 50% de la surface globale des parois 1820a et 1820b dans lesquelles elles sont réalisées.

Sur la figure 4 est illustrée une vue en perspective d'un deuxième exemple de structure en nid d'abeilles formant le coeur 12' du panneau de traitement acoustique 10 de la figure 2.

Le coeur 12' du deuxième exemple illustré sur la figure 4 diffère du coeur 12 du premier exemple illustré sur la figure 3 en ce que les alvéoles 18 de la première rangée 120a de la troisième rangée 120c comprennent deux ouvertures supplémentaires 186 communiquant chacune avec une alvéole 18 distincte de la deuxième rangée 120b, sauf aux extrémités du panneau de traitement acoustique 10. Et les alvéoles 18 de la deuxième rangée 120b comprennent chacune quatre ouvertures supplémentaires 186, deux ouvertures supplémentaires 186 communiquant avec une alvéole 18 distincte de la première rangée 120a, et deux ouvertures supplémentaires 186 communiquant avec une alvéole 18 distincte de la troisième rangée 120c.

Les ouvertures supplémentaires 186 des alvéoles 18 permettent ainsi d'associer des cellules de traitement acoustique 18 pour former des cavités résonantes de Helmholtz de plus grand volume et ainsi de favoriser l'accord des résonateurs de Helmholtz vers des fréquences plus basses, puisque l'accord en fréquence d'un résonateur d'Helmholtz dépend du volume de sa cavité résonante et du volume de son col ou de ses cols.

Sur la figure 5 est illustrée une vue en perspective d'un troisième exemple de structure en nid d'abeilles formant le coeur 12" du panneau de traitement acoustique 10 de la figure 2.

Le coeur 12" du troisième exemple illustré sur la figure 5 diffère du coeur 12 du premier exemple illustré sur la figure 3 en ce que les ouvertures 184" sont réalisées à l'aide d'un ensemble d'orifices circulaires 1840. Une ouverture 184 forme ainsi une grille ou un maillage dont l'ensemble des orifices 1840 se comporte collectivement comme une ouverture 184 formée d'un seul et unique grand trou.

Dans d'autres modes de réalisation, les orifices peuvent avoir d'autres formes comme par exemple une forme générale ovoïde, triangulaire, en étoile, en croix.

Sur la figure 6 est illustrée une vue en coupe du panneau de traitement acoustique 10 de la figure 2 monté sur la nacelle 2 au niveau du carter fan, c'est-à-dire du carter de soufflante 9, avec un premier exemple de couche d'entrée 14.

Comme cela est illustré sur la figure 6, la couche d'entrée 14 du panneau de traitement acoustique 10 présente une portion d'entrée poreuse 143 et une portion non poreuse 144 disposée en aval de la portion d'entrée poreuse 143 par rapport au sens du flux F dans le turboréacteur 1. La portion d'entrée poreuse 143 comprend des perforations 145 traversant l'épaisseur de la couche d'entrée 14 dans la direction radiale D_{R} pour permettre aux ondes sonores d'accéder aux alvéoles 18 du coeur 12 en nid d'abeille du panneau de traitement acoustique 10.

La portion non poreuse 144 couvre la surface d'au moins une alvéole. Ainsi, une ou plusieurs alvéoles 18 sont comprises radialement entre deux parois non poreuses formées par la portion non poreuse 144 de la couche d'entrée et la couche réfléchissante 16.

Les perforations 145 forment des passages d'entrée à certaines alvéoles 18 du panneau 10 directement en communication avec les perforations 145. Les perforations 145 forment ainsi également un passage pour les ondes sonores jusqu'à une extrémité amont des canaux de propagation 1840 du panneau de traitement acoustique 10, cette extrémité étant située en amont de la soufflante 9.

Dans le mode de réalisation illustré, pour accorder la fréquence de traitement autour de 200 Hz, au niveau de chaque alvéole 18 ayant des perforations en regard de sa cavité 180, les perforations 145 couvrent 8% de la portion de surface de la couche d'entrée 14 en regard de la cavité 180 de l'alvéole 18. Les perforations ont une forme circulaire avec un diamètre de 1,5 mm, et l'épaisseur de la portion d'entrée poreuse 143 de la couche d'entrée 14 est de 1,7 mm dans la direction radiale. La longueur de la zone d'entrée poreuse 143 mesurée selon la direction axiale D_{A} est légèrement plus faible que la hauteur des cellules nid d'abeille en regard.

Sur la figure 4 est illustré une vue en perspective d'un deuxième exemple de structure en nid d'abeilles formant le coeur 12' du panneau de traitement acoustique 10 de la figure 2.

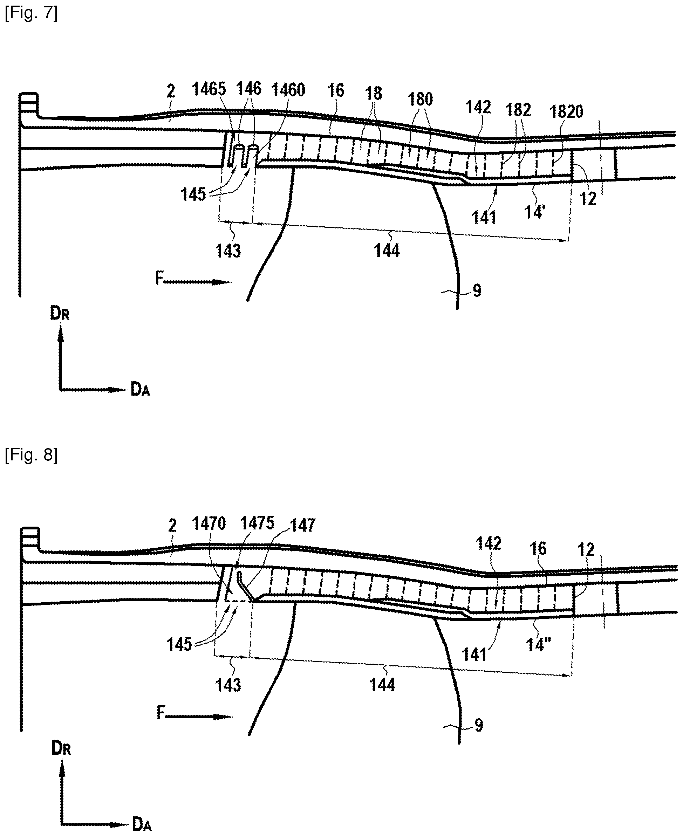

Sur la figure 7 est illustrée une vue en coupe du panneau de traitement acoustique 10 de la figure 2 monté sur la nacelle 2 au niveau du carter fan, c'est-à-dire du carter de soufflante 9, avec un deuxième exemple de couche d'entrée 14'.

La couche d'entrée 14' du panneau de traitement acoustique 10 du mode de réalisation illustré sur la figure 7 diffère de la couche d'entrée 14 du panneau de traitement acoustique 10 illustré sur la figure 6 en ce qu'elle comprend pour chaque perforation 145 des cols 146 tubulaires s'étendant radialement en saillie depuis la seconde face 142 de la couche d'entrée 14.

Chaque col 146 présente une forme tubulaire creuse formant un passage entre un premier orifice 1460 à une première extrémité radiale du tube en regard d'une perforation 145 et un second orifice 1465 à une seconde extrémité radiale du tube opposée à la première extrémité.

L'ajout de cols 146 aux perforations 145 de la couche d'entrée 14 dans les alvéoles 18 permettent de favoriser l'accord des résonateurs de Helmholtz formés par les alvéoles 18 ou les assemblages d'alvéoles 18 vers des fréquences plus basses.

Sur la figure 8 est illustrée une vue en coupe du panneau de traitement acoustique 10 de la figure 2 monté sur la nacelle 2 au niveau du carter fan, c'est-à-dire du carter de soufflante 9, avec un troisième exemple de couche d'entrée 14".

La couche d'entrée 14" du panneau de traitement acoustique 10 du mode de réalisation illustré sur la figure 8 diffère de la couche d'entrée 14 du panneau de traitement acoustique 10 illustré sur la figure 6 en ce qu'elle comprend pour chaque alvéole 18 disposée en regard d'au moins une perforation 145 un pavillon acoustique 147 s'étendant dans la cavité 180, à l'intérieure de l'enceinte 182, entre une première bouche 1470 à une première extrémité radiale du pavillon 147 solidaire de la couche d'entrée 14 et une seconde bouche 1475 plus petite que la première bouche 1470 et disposée à une seconde extrémité radiale du pavillon 147 opposée à sa première extrémité.

L'ajout d'un pavillon acoustique 147 dans une alvéole 18 permet de favoriser l'accord des résonateurs de Helmholtz vers des fréquences plus basses.

Le panneau de traitement acoustique selon l'invention permet ainsi d'amortir le flottement de la soufflante d'un turboréacteur et tout en pouvant être implanté sans modification majeure dans le carter fan.

## Revendications

1. Panneau de traitement acoustique (10) destiné à être disposé sur au moins une paroi d'un turboréacteur (1) en contact avec un écoulement fluidique, le panneau (10) comprenant une première plaque (16), une seconde plaque (14, 14', 14") parallèle à la première plaque (16) et présentant une première face (141) destinée à être en contact avec un écoulement fluidique et une seconde face (142) en regard de la première plaque (16), et des cellules de traitement acoustique (18) s'étendant entre les première et seconde plaques (16, 14) et comportant chacune une enceinte (182) et une cavité (180) délimitée par l'enceinte (182),
l'enceinte (182) de chaque cellule (18) comprenant deux ouvertures (184, 184") en vis-à-vis l'une de l'autre, au moins une des ouvertures (184, 184") étant confondue avec une ouverture (184, 184") de l'enceinte (182) d'une cellule (18) adjacente,
**caractérisé en ce que** la seconde plaque (14, 14', 14") comprend une portion non poreuse (144) couvrant au moins une première cellule de traitement acoustique (18) et au moins une portion (143) poreuse disposée en regard d'au moins une seconde cellule de traitement acoustique (18) et comprenant au moins une perforation (145) traversant l'épaisseur de la seconde plaque (14, 14', 14") et permettant aux ondes sonores d'accéder à au moins une seconde cellule de traitement acoustique (18) et à ladite au moins une première cellule de traitement acoustique (18) via les ouvertures (184, 184").

2. Panneau de traitement acoustique (10) selon la revendication 1, dans lequel lesdites cellules (18) sont disposées en rangées (120a, 120b, 120c) parallèles entre elles, et les ouvertures (184, 184") des cellules (18) d'une même rangée (120a, 120b, 120c) sont alignées selon la direction de la rangée pour définir un canal (1840) de propagation d'ondes sonores traversant les ouvertures (184, 184") des cellules (18) de la rangée (120a, 120b, 120c).

3. Panneau de traitement acoustique (10) selon la revendication 2, dans lequel au moins une rangée (120a) comprend des cellules de traitement acoustique comportant au moins une ouverture supplémentaire (186) communiquant avec une cellule (18) d'une rangée adjacente (120b, 120c).

4. Panneau de traitement acoustique (10) selon l'une des revendications 1 à 3, dans lequel chaque cellule de traitement acoustique (18) comprend une cavité (180) cylindrique à base hexagonale délimitée par une enceinte (182) comportant six parois (1820) s'étendant entre la première plaque (16) et la seconde plaque (14, 14', 14").

5. Panneau de traitement acoustique (10) selon la revendication 4, dans lequel chaque ouverture (184, 184") s'étend sur 10% à 95% de la surface de la paroi (1820) sur laquelle elle est réalisée.

6. Panneau de traitement acoustique (10) selon la revendication 5, dans lequel chaque ouverture (184, 184") couvre plus de 25% de la surface de la paroi (1820) sur laquelle elle est réalisée.

7. Panneau de traitement acoustique (10) selon l'une des revendications 1 à 6, dans lequel les ouvertures (184, 184") ont la même forme géométrique.

8. Panneau de traitement acoustique (10) selon l'une des revendications 1 à 7, dans lequel chaque ouverture (184") est formée par une pluralité d'orifices (1840).

9. Panneau de traitement acoustique (10) selon l'une des revendications 1 à 8, dans lequel la seconde plaque (14') comprend une pluralité de perforations (145) et des cols (146) solidaires chacun d'une desdites perforations (145) et s'étendant en saillie de la seconde face (142) de la seconde plaque (14') entre une première bouche (1460) et une seconde bouche (1465).

10. Panneau de traitement acoustique (10) selon l'une des revendications 1 à 8, dans lequel les cellules de traitement acoustique (18) disposés en regard d'au moins une perforation (145) de la seconde plaque (14") comprennent chacune un pavillon acoustique (147) s'étendant à l'intérieure de l'enceinte (182) de la cellule (18) entre une première bouche (1470) solidaire de la seconde plaque (14") et une seconde bouche (1475) plus petite que la première bouche (1470).

11. Panneau de traitement acoustique (10) selon l'une des revendications 1 à 10, dans lequel la longueur selon la direction axiale (D_{A}) de ladite portion (143) de la plaque (14, 14', 14") est inférieure à la hauteur des cellules (18) disposées en regard de ladite portion (143).

12. Turboréacteur (1) comprenant une nacelle (2) dotée d'au moins une paroi comprenant au moins un panneau de traitement acoustique (10) selon l'une des revendications 1 à 11.

13. Turboréacteur (1) selon la revendication 12 dans lequel au moins un panneau de traitement acoustique (10) comprend des canaux de propagation d'ondes (1840) sonores selon la revendication 6 lorsqu'elle dépend de la revendication 2 et le turboréacteur (1) définit une direction axiale (D_{A}) correspondant à l'axe de rotation des turbines, les canaux de propagation (1840) étant alignés dans des directions non parallèles à la direction axiale (D_{A}) du turboréacteur (1).

## Patentansprüche

1. Schallbehandlungstafel (10), die dazu bestimmt ist, an mindestens einer Wand eines Turbotriebwerks (1) in Kontakt mit einem Fluidstrom angeordnet zu werden, wobei die Tafel (10) eine erste Platte (16), eine zweite Platte (14, 14', 14"), die parallel zur ersten Platte (16) verläuft und eine erste Seite (141), die dazu bestimmt ist, mit einer Fluidströmung in Kontakt zu sein, und eine zweite Seite (142), die der ersten Platte (16) gegenüberliegt, und Schallbehandlungszellen (18) aufweist, die sich zwischen der ersten und der zweiten Platte (16, 14) erstrecken und jeweils eine Einfassung (182) und einen von der Einfassung (182) begrenzten Hohlraum (180) umfassen,
wobei die Einfassung (182) jeder Zelle (18) zwei einander zugewandte Öffnungen (184, 184") umfasst, wobei mindestens eine der Öffnungen (184, 184") mit einer Öffnung (184, 184") der Einfassung (182) einer benachbarten Zelle (18) zusammenfällt,
**dadurch gekennzeichnet, dass** die zweite Platte (14, 14', 14") einen nicht porösen Abschnitt (144), der mindestens eine erste Schallbehandlungszelle (18) bedeckt, und mindestens einen porösen Abschnitt (143) umfasst, der gegenüber mindestens einer zweiten Schallbehandlungszelle (18) angeordnet ist und mindestens eine Perforation (145) umfasst, die die Dicke der zweiten Platte (14, 14', 14") durchdringt und den Schallwellen über die Öffnungen (184, 184") den Zugang zu mindestens einer zweiten Schallbehandlungszelle (18) und der mindestens einen ersten Schallbehandlungszelle (18) ermöglicht.

2. Schallbehandlungstafel (10) nach Anspruch 1, wobei die Zellen (18) in Reihen (120a, 120b, 120c) parallel zueinander angeordnet sind und die Öffnungen (184, 184") der Zellen (18) einer gleichen Reihe (120a, 120b, 120c) entlang der Richtung der Reihe ausgerichtet sind, um einen Kanal (1840) für die Ausbreitung von Schallwellen zu definieren, der durch die Öffnungen (184, 184") der Zellen (18) der Reihe (120a, 120b, 120c) verläuft.

3. Schallbehandlungstafel (10) nach Anspruch 2, wobei mindestens eine Reihe (120a) Schallbehandlungszellen mit mindestens einer zusätzlichen Öffnung (186) umfasst, die mit einer Zelle (18) einer benachbarten Reihe (120b, 120c) in Verbindung steht.

4. Schallbehandlungstafel (10) nach einem der Ansprüche 1 bis 3, wobei jede Schallbehandlungszelle (18) einen zylindrischen Hohlraum (180) mit sechseckiger Grundfläche umfasst, der von einer Einfassung (182) mit sechs Wänden (1820) begrenzt wird, die sich zwischen der ersten Platte (16) und der zweiten Platte (14, 14', 14") erstrecken.

5. Schallbehandlungstafel (10) nach Anspruch 4, wobei sich jede Öffnung (184, 184") über 10 % bis 95 % der Fläche der Wand (1820) erstreckt, an der sie ausgebildet ist.

6. Schallbehandlungstafel (10) nach Anspruch 5, wobei jede Öffnung (184, 184") mehr als 25 % der Fläche der Wand (1820), auf der sie ausgebildet ist, bedeckt.

7. Schallbehandlungstafel (10) nach einem der Ansprüche 1 bis 6, wobei die Öffnungen (184, 184") die gleiche geometrische Form aufweisen.

8. Schallbehandlungstafel (10) nach einem der Ansprüche 1 bis 7, wobei jede Öffnung (184") durch eine Vielzahl von Löchern (1840) gebildet wird

9. Schallbehandlungstafel (10) nach einem der Ansprüche 1 bis 8, wobei die zweite Platte (14') eine Vielzahl von Perforationen (145) und Kragen (146) umfasst, die jeweils fest mit einer der Perforationen (145) verbunden sind und sich von der zweiten Seite (142) der zweiten Platte (14') zwischen einer ersten Mündung (1460) und einer zweiten Mündung (1465) vorspringend erstrecken.

10. Schallbehandlungstafel (10) nach einem der Ansprüche 1 bis 8, in der die Schallbehandlungszellen (18), die gegenüber mindestens einer Perforation (145) der zweiten Platte (14") angeordnet sind, jeweils ein akustisches Horn (147) umfassen, das sich im Inneren der Einfassung (182) der Zelle (18) zwischen einer ersten Mündung (1470), die fest mit der zweiten Platte (14") verbunden ist, und einer zweiten Mündung (1475), die kleiner als die erste Mündung (1470) ist, erstreckt.

11. Schallbehandlungstafel (10) nach einem der Ansprüche 1 bis 10, wobei die Länge in der axialen Richtung (D_{A}) des Abschnitts (143) der Platte (14, 14', 14") kleiner ist als die Höhe der Zellen (18), die gegenüber dem Abschnitt (143) angeordnet sind.

12. Turbostrahltriebwerk (1) mit einer Gondel (2), die mit mindestens einer Wand versehen ist, die mindestens eine Schallbehandlungstafel (10) nach einem der Ansprüche 1 bis 11 umfasst.

13. Turbostrahltriebwerk (1) nach Anspruch 12, wobei mindestens eine Schallbehandlungstafel (10) Schallwellenausbreitungskanäle (1840) nach Anspruch 6 umfasst, wenn er von Anspruch 2 abhängt, und das Turbostrahltriebwerk (1) eine axiale Richtung (D_{A}) definiert, die der Drehachse der Turbinen entspricht, wobei die Ausbreitungskanäle (1840) in Richtungen ausgerichtet sind, die nicht parallel zu der axialen Richtung (D_{A}) des Turbostrahltriebwerks (1) sind.

## Claims

1. An acoustic treatment panel (10) intended to be disposed on at least one wall of a turbojet (1) in contact with a fluid flow, the panel (10) comprising a first sheet (16), a second sheet (14, 14', 14") parallel to the first sheet (16) and having a first face (141) intended to be in contact with a fluid flow and a second face (142) facing the first sheet (16), and acoustic treatment cells (18) extending between the first and second sheets (16, 14) and each including an enclosure (182) and a cavity (180) delimited by the enclosure (182),
the enclosure (182) of each cell (18) comprising two openings (184, 184") facing one another, at least one of the openings (184, 184") being coincident with an opening (184, 184") of the enclosure (182) of an adjacent cell (18),
**characterized in that** the second sheet (14, 14', 14") comprises a non-porous portion (144) covering at least one first acoustic treatment cell (18) and at least one porous portion (143) disposed facing the at least one second acoustic treatment cell (18) and comprising at least one perforation (145) passing through the thickness of the second sheet (14, 14', 14") and allowing the sound waves to gain access to at least one second acoustic treatment cell (18) and to said at least one first acoustic treatment cell (18) via the openings (184, 184").

2. The acoustic treatment panel (10) according to claim 1, wherein said cells (18) are disposed in mutually parallel rows (120a, 120b, 120c) and the openings (184, 184") of the cells (18) of the same row (120a, 120b, 120c) are aligned in the direction of the row to define a propagation channel (1840) for sound waves passing through the openings (184, 184") of the cells (18) of the row (120a, 120b, 120c).

3. The acoustic treatment panel (10) according to claim 2, wherein at least one row (120a) comprises acoustic treatment cells including at least one additional opening (186) communicating with a cell (18) of an adjacent row (120b, 120c).

4. The acoustic treatment panel (10) according to one of claims 1 to 3, wherein each acoustic treatment cell (18) comprises a cylindrical cavity (180) with a hexagonal base delimited by an enclosure (182) including six walls (1820) extending between the first sheet (16) and the second sheet (14, 14', 14").

5. The acoustic treatment panel (10) according to claim 4, wherein each opening (184, 184") extends over 10% to 95% of the surface of the wall (1820) on which it is formed.

6. The acoustic treatment panel (10) according to claim 5, wherein each opening (184, 184") covers more than 25% of the surface of the wall (1820) on which it is formed.

7. The acoustic treatment panel (10) according to one of claims 1 to 6, wherein the openings (184, 184") have the same geometric shape.

8. The acoustic treatment panel (10) according to one of claims 1 to 7, wherein each opening (184") is formed by a plurality of openings (1840).

9. The acoustic treatment panel (10) according to one of claims 1 to 8, wherein the second sheet (14') comprises a plurality of perforations (145) and necks (146) each secured to one of said perforations (145) and protruding from the second face (142) of the second sheet (14') between a first aperture (1460) and a second aperture (1465).

10. The acoustical treatment panel (10) according to one of claims 1 to 8, wherein the acoustic treatment cells (18) disposed facing the at least one perforation (145) of the second sheet (14") each comprise a horn (147) extending inside the enclosure (182) of the cell (18) between a first aperture (1470) secured to the second sheet (14") and a second aperture (1475) smaller than the first aperture (1470).

11. The acoustic treatment panel (10) according to one of claims 1 to 10, wherein the length in the axial direction (D_{A}) of said portion (143) of the sheet (14, 14', 14") is less than the height of the cells (18) disposed facing said portion (143).

12. A turbojet (1) comprising a nacelle (2) provided with at least one wall comprising at least one acoustic treatment panel (10) according to one of claims 1 to 11.

13. The turbojet (1) according to claim 12, wherein at least one acoustic treatment panel (10) comprises sound wave propagation channels (1840) according to claim 6 and the turbojet (1) defines an axial direction (D_{A}) corresponding to the axis of rotation of the turbines, the propagation channels (1840) being aligned in directions not parallel to the axial direction (D_{A}) of the turbojet (1).
